# EUROPEAN PATENT APPLICATION

(11) **EP 4 678 811 A1**
(43) Date of publication of application: **14.01.2026**
(21) Application number: 24187773.7
(22) Date of filing: 10.07.2024
(51) Int. Cl.: D06P 1/44, D06P 1/46, D06P 1/52, D06P 1/613, D06P 1/66, D06P 5/00, D06P 7/00, C09D 11/0235, D06P 1/48, D06P 5/20, D06P 5/08

(54) **COMPOSITIONS FOR SCREEN PRINTING OF TEXTILE FABRICS**

(71) Applicant: Swiss Performance Chemicals AG, 4132 Muttenz (CH)
(72) Inventor: Mheidle, Mickael, 68390 Sausheim (FR)
(74) Representative: E. Blum & Co. AG

(57) **Abstract**

The present invention relates to a water-based screen-printing ink composition for textile printing and a process for screen printing a textile. The water-based ink composition is silicone- and halogen-free and contains a pigment, a water-dispersible binder, a surfactant, a thickening agent, and an esterquat.

## Description

### FIELD OF THE INVENTION

The present invention relates to the technical field of screen-printing compositions for finishing and/or colouring textile fabrics, and processes for manufacturing coloured, optionally finished, textile fabrics by screen printing.

### BACKGROUND OF THE INVENTION

Screen printing, sometimes refer to as "silk screening" has been extensively used in textile industry for printing images such as text, pictures or designs onto textile fabrics or the like such as woven fabrics, knitted fabrics and nonwoven fabrics.

Typically screen printing relies upon the use of either plasticizing emulsions, or water-based inks.

When plasticizing emulsions are used, the printing process further requires a curing step. Such plasticizing emulsions typically contain plastisol that includes coloured polyvinyl chloride (PVC) particles dispersed in and swelled by phthalate-based plasticizers. The plasticizing emulsion forms a coating on the surface of the textile fabric, but does not penetrate the fabric. Upon application to the fabric, plastisol does not dry and requires heating to about 180°C for full curing. The cured coating is essentially permanently affixed upon the textile fabric having a raised plasticized texture, thereby significantly modifying the hand of the textile. Besides, due to environmental and health and safety concerns, the composition of the plasticizing emulsions is under increasing regulatory scrutiny.

Alternatively, water-based inks are used for textile screen printing. When a pigment is used as colorant in the water-based inks, a fixing resin or binder is necessary to be added to the ink for allowing fixation of the pigment on the textile fabric. To improve the rubbing fastness, generally a high amount of resin or binder (i.e., three to four times higher than the amount of pigment for deep shade) is included in the ink, which leads to a modification of the textile hand and a relatively poor crocking fastness. The screen-printing process with water-based inks requires drying of the fabric, typically in a tunnel oven, at temperatures higher than 200°C to ensure permanence in the fabric.

In consequence, there is still a need for compositions and processes for screen printing textile fabrics that address the above-mentioned drawbacks. In particular, there is a need for compositions for screen printing of textiles that are versatile in terms of textile fabrics substrate, are environmentally friendly and provide printed textile fabrics with excellent rubbing fastness and color development properties and without impacting the textile hand.

### SUMMARY OF THE INVENTION

Accordingly, it is an object of the present invention to provide a silicone- and halogen-free water-based screen-printing ink composition for textile printing,
wherein said composition has a viscosity from 1000 to 8000 cPs, preferably from 5000 to 8000 cPs, at 25°C and a shear rate of 1 to 100 s⁻¹, and comprises, preferably consists of:
- from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of a pigment dispersed within the composition;
- from 0.5 wt-% to 6.0 wt-%, preferably 1.0 wt-% to 6.0 wt-%, more preferably from 2.0 wt-% to 5.0 wt-%, of a water-dispersible binder selected from a polyurethane resin, a poly(meth)acrylate resin, and mixtures thereof;
- from 1.5 wt-% to 3.0 wt-% of a surfactant;
- from 3 wt-% to 6 wt-% of a thickening agent selected from a starch, a carob gum, a guar gum, a carrageenan, an alginic acid, a polyalkylene glycol polymer, and mixtures thereof;
- from 2.5 wt-% to 4.5 wt-% of an esterquat;
- optionally a pH adjusting agent and/or a biocide and/or a wax of vegetal origin and/or an oil of vegetal origin and/or glycerol; and
- water;
wherein the wt-% are based on the total weight of the composition.

A further aspect according to the invention is directed to a process for manufacturing a printed, optionally finished, textile fabric comprising, preferably consisting of, the following steps:
a) providing a non-coloured textile fabric;
b) screen printing one or more screen printing compositions on one side of said fabric, or one or more regions of said side, wherein at least one of said screen printing composition is a screen-printing ink composition according to the present invention;
c) drying the textile by exposure to an air having a temperature from about 120°C to about 140°C for at least 1 min to provide a dried textile; and
d) calendering the textile fabric for at least 10 seconds at a temperature from about 140°C to about 160°C to provide a printed, optionally finished, textile fabric.

### DESCRIPTION OF THE FIGURES

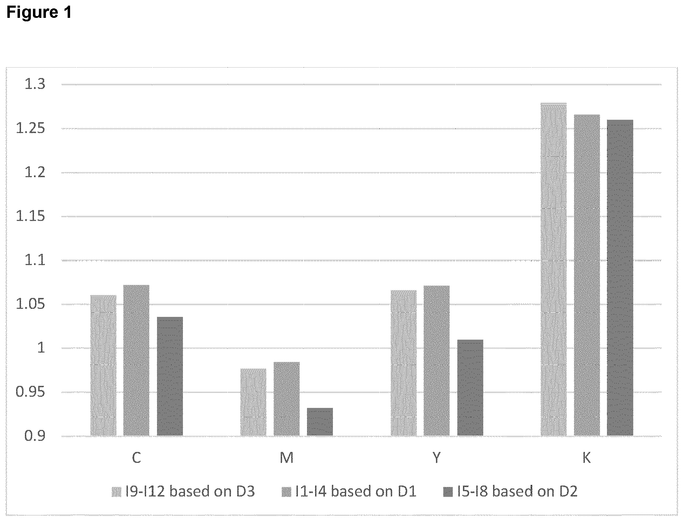

**Figure 1** shows the color density measured on textiles printed with CMYK screen printing ink compositions **I1 - I4** (obtained from dispersion D1), **I5 - I8** (obtained from dispersion D2) and **I9 - I12** (obtained from dispersion D3)

### DETAILED DESCRIPTION OF THE INVENTION

Thus, it is an object of the present invention to address the need for a composition for screen printing of textiles that is environmentally friendly and versatile in terms of textile fabrics substrate, and provides printed textile fabrics with excellent rubbing fastness and color development properties, without modifying the hand of the textile and for a time-expedient and environmentally friendly manufacturing process relying upon the use of such compositions. The object is achieved by the water-based screen-printing composition according to claim 1, and the manufacturing processes according to claims 10 and 14. Preferred embodiments are disclosed in the specification and the dependent claims.

The present invention will be described in more detail below.

Where the present description refers to "preferred" embodiments/features, combinations of these "preferred" embodiments/features are also deemed to be disclosed as long as the specific combination of the "preferred" embodiments/features is technically meaningful.

Unless otherwise stated, the following definitions shall apply in this specification:
As used herein, the term "a", "an", "the" and similar terms used in the context of the present invention (especially in the context of the claims) are to be construed to cover both the singular and plural unless otherwise indicated herein or clearly contradicted by the context.

As used herein, the term "and/or" means that either all or only one of the elements of said group may be present. For example, "A and/or B" means "only A, or only B, or both A and B". In the case of "only A", the term also covers the possibility that B is absent, i.e. "only A, but not B".

As used herein, the terms "including", "containing" and "comprising" are used herein in their open-ended, non-limiting sense. It is understood that the various embodiments, preferences and ranges may be combined at will. Thus, for instance a solution comprising a compound A may include other compounds besides A. However, the term "comprising" also covers, as a particular embodiment thereof, the more restrictive meanings of "consisting essentially of" and "consisting of, so that for instance "a solution comprising A, B and optionally C" may also (essentially) consist of A and B, or (essentially) consist of A, B and C. As used herein, the transitional phrase "consisting essentially of" (and grammatical variants) is to be interpreted as encompassing the recited materials or steps and those that do not materially affect the basic and novel characteristic(s) of the claimed invention. Thus, the term "consisting essentially of" should not be interpreted as equivalent of "comprising".

As used herein, the term "about" means that the amount or value in question may be the specific value designated or some other value in its neighborhood. Generally, the term "about" denoting a certain value is intended to denote a range within ± 5 % of the value. As one example, the phrase "about 100" denotes a range of 100 ± 5, i.e. the range from 95 to 105. Preferably, the range denoted by the term "about" denotes a range within ± 3 % of the value, more preferably ± 1 %. Generally, when the term "about" is used, it can be expected that similar results or effects according to the invention can be obtained within a range of ±5 % of the indicated value.

As used herein, the term "textile fabric" is intended to encompass all forms of textile substrates, including woven, knitted and non-woven textile substrates. The term is intended to exclude fibrous substrates having two-dimensional rigidity such as carpets, paper and cardboard. The fibrous substrates, although sometimes referred as textiles, are internally linked in such a way that they maintain a substantially fixed two-dimensional form. Even though they may be flexible in a third dimension they are not generally free to stretch or distort within the plane of the fiber layer, as is inherent in a true textile. Preferably, the textile is more than 100 meters (e.g. 500 meters) in length and can be provided on a roll having a width of greater than 1 meter. Preferably, the textile is a woven, knitted or nonwoven textile fabric. The fabric preferably contains synthetic and/or natural fibers, preferably selected from silk fibers, cellulose fibers, elastane fibers, polyamide fibers and polyester fibers. In certain embodiments, the fabric may contain fibers of animal origin, such as down, wool, leather or fur.

### Screen printing ink composition

Surprisingly, it has been found that a silicone- and halogen-free composition having a viscosity from 1000 to 8000 cPs, preferably from 5000 to 8000 cPs, at 25°C and a shear rate of 1 to 100 s⁻¹, and comprising, preferably consisting of:
- from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of a pigment dispersed within the composition;
- from 0.5 wt-% to 6.0 wt-%, preferably from 1.0 wt-% to 6.0 wt-%, more preferably from 2.0 wt-% to 5.0 wt-%, of a water-dispersible binder selected from a polyurethane resin, a poly(meth)acrylate resin, and mixtures thereof;
- from 1.5 wt-% to 3.0 wt-% of a surfactant;
- from 3 wt-% to 6 wt-% of a thickening agent selected from a starch, a carob gum, a guar gum, a carrageenan, an alginic acid, a polyalkylene glycol polymer, and mixtures thereof, preferably selected from a starch, a carob gum, a polyalkylene glycol polymer, and mixtures thereof;
- from 2.5 wt-% to 4.5 wt-% of an esterquat;
- optionally a pH adjusting agent and/or a biocide and/or a wax of vegetal origin and/or an oil of vegetal origin and/or glycerol; and
- water; is especially suitable for textile printing of a variety of textile fabric substrates by screen printing, and provides printed textile fabrics with excellent rubbing fastness and color development properties, without modifying the textile hand. Advantageously, the screen printing ink composition does not contain silicones and halogenated compounds, which are known to be non-biodegradable and even toxic. As used herein and unless otherwise specified, the indicated wt-% are based on the total weight of the formulation.

The term "silicone-free composition" refers to a composition that does not contain a silicone/polysiloxane. As used herein, the term "silicone" and "polysiloxane" encompasses all polymers containing a polysiloxane moiety including, but not limited to, silicones/polysiloxanes oils, modified polysiloxanes, such as epoxy or/and amino-modified polysiloxanes, and polyether-modified polysiloxanes, and linear multiblock polysiloxane copolymers. Silicones (polyxiloxanes), including epoxy or/and amino-modified polysiloxanes, polyether-modified polysiloxanes, which contain polyether active groups grafted on the side chains of polysiloxane chains, and linear multiblock polysiloxane copolymers, are widely used as softeners or softening agents in textile softening compositions and inks to impart softness to and improve the wear feeling of the treated textile by reducing the friction coefficient between fibers. Silicone softening agents are synthetic compounds, the synthesis of which generally requires a lot of energy. Moreover, the production of textile softening composition using silicone softeners has a high carbon footprint since a lot of energy is required for obtaining the desired emulsion. Furthermore, silicone softening agents are not biodegradable and accumulate in the environment.

The term "halogen-free composition" refers to a composition that does not contain a halogenated compound, such as fluorinated compounds (e.g., per- or polyfluoroalkyl substance (PFAS)), or chlorinated compounds (e.g., polyvinyl chloride (PVC)). Fluorinated compounds, in particular PFAS, are typically used in printing compositions as water-repellent and known to accumulate in the environment, drinking water and food, and to be harmful to the environment and the human body.

To be compatible with the commercially available screen-printing machines, the ink composition must have a viscosity from 1000 to 8000 cPs, preferably from 5000 to 8000 cPs, at 25°C and a shear rate of 1 to 100 s⁻¹. The viscosity may be measured with a rheometer BROOKFLIED DVN, flat cone, 50 RPM.

The screen printing ink composition contains from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of a pigment dispersed within the composition. The ink compositions provide even at low pigment content, such as 1.0 wt-% or 2.0 wt-% strong colour coverage on the printed side with no back-staining.

Any of the pigments typically used in this technical field may be used as the pigment. Examples of pigments include organic pigments such as azo-based pigments, phthalocyanine-based pigments, dye-based pigments, condensed polycyclic pigments, nitro-based pigments and nitroso-based pigments, inorganic pigments including metals such as cobalt, iron, chromium, copper, zinc, lead, titanium, vanadium, manganese and nickel, as well as metal oxides and sulfides, and yellow ocher, ultramarine and iron blue pigments, and carbon blacks such as furnace carbon black, lamp black, acetylene black and channel black. Examples of commercially available pigments suitable for being used in the present formulation include Pigment Black 7 (Carbon Black), Pigment Yellow (PY)155, Pigment Red (PR)254, Pigment Blue (PB)15:3, Pigment Blue (PV)23, Pigment Red (PV)19, Pigment Red (PR)122, Pigment Red (PV)19, Pigment Red (PR)254, Pigment Yellow (PY)155, Pigment Orange (PO)34 and Pigment Blue (PV)23.

The screen-printing ink composition further contains from 0.5 wt-% to 6.0 wt-%, preferably from 1.0 wt-% to 6 wt-%, more preferably 2.0 wt-% to 5 wt-%, of a water-dispersible binder, which is significantly lower than the amount of binder typically used in a pigment water-based screen printing ink. Within the present patent application, the wt-% indicated for the water-dispersible resins refers to the amount of the non-volatile water-dispersible resins in the screen-printing composition (i.e., calculated based on the solid or non-volatile content specified for the commercially available products).

As used herein, the terms "water-dispersible resin" and "water-dispersible binder" are interchangeable and encompass self-emulsifying resins in which a hydrophilic component necessary for being stably dispersed in water is introduced or a resin which becomes water-dispersible by the use of an external emulsifier.

Said water-dispersible binder is selected from a polyurethane resin, a poly(meth)acrylate resin, and mixtures thereof.

As used herein the term "a water-dispersible polyurethane resin" encompasses a single water-dispersible urethane resin and a combination of two or more water-dispersible resins. A water-dispersible polyurethane resin has a urethane skeleton. Examples of resins that may be used as the water-dispersible urethane resin include polyether urethane resins that contain ether linkages in the main chain in addition to the urethane linkages, polyester urethane resins that contain ester linkages in the main chain in addition to the urethane linkages, and polycarbonate urethane resins that contain carbonate linkages in the main chain in addition to the urethane linkages. Among these, polycarbonate urethane resins and polyester urethane resins can be used particularly favourably. A combination of a plurality of these types of water-dispersible urethane resins may also be used.

Preferable examples of water-dispersible urethane resins include anionic urethane resins having an anionic functional group such as carboxyl group, sulfo group or hydroxyl group.

Specific examples of the water-dispersible urethane resin include SUPERFLEX 300 (Tg: -42°C), SUPERFLEX 420 (Tg: -10°C), SUPERFLEX 460 (Tg: -21°C), SUPERFLEX 460S (Tg: -28°C), SUPERFLEX 470 (Tg: -31°C), SUPERFLEX 500M (Tg: -39°C), SUPERFLEX 740 (Tg: -34°C), and SUPERFLEX 150HS (Tg: 32°C), all manufactured by DKS Co. Ltd., DAOTAN TW 6490/35WA (Tg: 32°C) manufactured by Daicel-Allnex Ltd., TAK.ELAC W-6061 (Tg: 25°C) manufactured by Mitsui Chemicals, Inc., UW-1701F (Tg: 5°C) manufactured by Ube Industries, Ltd and Sancure 777F (water-based polyurethane dispersion containing polyurethane, 1-methyl-2-pyrrolidinone, triethylamine and water (35 wt-% non-volatile contents)) manufactured by Lubrizol.

As used herein the term "water-dispersible (meth)acrylic resin" encompasses a single water-dispersible (meth)acrylic resin and a combination of two or more resins.

A water-dispersible (meth)acrylic resin contains at least a methacrylic unit derived from a methacrylic-based monomer and/or an acrylic unit derived from an acrylic-based monomer. The water-dispersible (meth)acrylic resin may also contain one or more other units, provided these other units do not include a urethane containing unit. Examples of the methacrylic-based monomer and acrylic-based monomer include (meth)acrylate esters such as methyl (meth)acrylate, and (meth)acrylic acid and the like. The term "(meth)acrylic" represents both "acrylic" and "methacrylic", and the term "(meth)acrylate" represents both "acrylate" and "methacrylate".

Preferable examples of water-dispersible (meth)acrylic resins include anionic (meth)acrylic resins.

Specific examples of the water-dispersible (meth)acrylic resin include PIDICRYL BINDER 5555 manufactured by Pidilite Industries, Mowinyl 675ID (Tg: -32°C), Mowinyl 6960 (Tg: -32°C), Mowinyl 6963 (Tg: -28°C), Mowinyl 702 (Tg: -19°C), Mowinyl 8020 (Tg: -22°C), Mowinyl 966A (Tg: -29°C), Mowinyl 6718 (Tg: 3°C), Mowinyl 6750 (Tg: 0°C) and Mowinyl 7720 (Tg: 4°C), all manufactured by The Nippon Synthetic Chemical Industry Co., Ltd., Joncryl PDX-7341 (Tg: 15°C), Joncryl PDX-7370 (Tg: 12°C) and Joncryl^{®} HPD 296 KOH (Tg: 15° C), manufactured by BASF Corporation, and NeoCryl A-1094 (Tg: 21°C), NeoCryl BT-62 (Tg: 22°C), manufactured by DSM Coating Resins D.V., Hycar^{®} 26907 (Tg: 22°C), manufactured by Lubrizol and Carboset^{®} (e.g., Carboset^{®} 527 (Tg: 54°C), Carboset^{®} 514) manufactured by Lubrizol, and Celbinder 15E Acrylic binder manufactured by Britacell India,

In a preferred embodiment, the water-dispersible resin is a water-dispersible (meth)acrylate resin, preferably PIDICRYL BINDER 5555.

In a further preferred embodiment, the water-dispersible resin is a mixture of a polyurethane resin, and a poly(meth)acrylate resin.

The water-based screen-printing ink further contains from 1.5 wt-% to 3.0 wt-% of a surfactant.

The term "surfactant" is known in the field. It particularly includes compounds that reduce surface tension and / or improve dispersion properties. A person skilled in the art is in a position to identify surfactants suitable for compositions printable by screen printing. The term includes cationic, anionic, non-ionic and zwitterionic surfactants. Preferably, the surfactant is biodegradable and/or obtained from renewable raw materials. Examples of suitable commercially available surfactants include, but are not limited to, rhamnolipids (e.g. biosurfactant REWOFERM^{®} RL 100 commercially available from Evonik), sophorolipids (e.g. biosurfactant REWOFERM^{®} SL ONE commercially available from Evonik), sorbitane monooleate (commercially available under the commercial name Span^{®} 80 from Sigma Aldrich), polyethylene glycol sorbitan monooleate (e.g. Tween^{®} 80 commercially available from Sigma Aldrich), sodium dioctylsulfosuccinate, ethoxylated 2,4,7,9-tetramethyl-5-decyne-4,7-diol, ethoxylated fatty alcohols (e.g. ethoxylated cetyl-stearyl alcohol (Eco Brij CS20) commercially available from Croda), alkyl glycosides (e.g., lauryl glucoside), and mixtures thereof (e.g. Surfinol^{®} PSA 336 commercially available from Evonik which is a blend of sodium dioctylsulfosuccinate and ethoxylated 2,4,7,9-tetramethyl-5-decyne-4,7-diol).

The surfactant is preferably a mixture of surfactants, more preferably a mixture of surfactants, wherein one of said surfactants is lauryl glucoside. The lauryl glucoside is preferably of vegetal origin (e.g., derived from palm kernel oil, corn sugar, or coconut). The mixture of surfactants may further contain Span^{®} 80 (sorbitane monooleate) and/or Tween^{®} 80 (polyethylene glycol sorbitan monooleate) and/or Eco Brij CS20 (ethoxylated cetyl-stearyl alcohol) and/or Surfinol^{®} PSA 336 (blend of sodium dioctylsulfosuccinate and ethoxylated 2,4,7,9-tetramethyl-5-decyne-4,7-diol). In preferred embodiments, the surfactant is a mixture of Span^{®} 80 (sorbitane monooleate), Tween^{®} 80 (polyethylene glycol sorbitan monooleate), Eco Brij CS20 (ethoxylated cetyl-stearyl alcohol) and lauryl glucoside. In further preferred embodiments, the surfactant is a mixture of Span^{®} 80 (sorbitane monooleate), Tween^{®} 80 (polyethylene glycol sorbitan monooleate), Surfinol^{®} PSA 336 (blend of sodium dioctylsulfosuccinate and ethoxylated 2,4,7,9-tetramethyl-5-decyne-4,7-diol) and lauryl glucoside. The ink composition preferably contains an amount from 1.0 wt-% to 1.75 wt-% of lauryl glucoside.

The water-based screen-printing ink further contains from 3 wt-% to 6 wt-% of a thickening agent. As well known to the skilled person, a thickening agent or a thickener is a substance that increases the viscosity of a composition without substantially changing its other properties. A person skilled in the art is in a position to adjust the amount of the thickening agent so as to obtain the viscosity required for the composition.

Surprisingly, it has been found that a starch, a carob gum, a guar gum, a carrageenan, an alginic acid, a polyalkylene glycol polymer, and mixtures thereof are particularly useful as thickening agent for screen printing ink compositions. Hence, within the present invention, the thickening agent is selected from a starch, a carob gum, a guar gum, a carrageenan, an alginic acid, a polyalkylene glycol polymer, and mixtures thereof, preferably from a starch, a carob gum, a polyalkylene glycol polymer, and mixtures thereof. Advantageously, the thickening agent used herein is commercially available, easily dispersible in water upon mixing, and generally of natural origin and biodegradable.

As used herein, the term "starch" encompasses the native starch (i.e. polysaccharide obtained from plants generally containing 20-25 wt-% of amylose and 75-80 wt-% amylopectin by weight) and the modified starch (i.e. obtained by subjecting the native starch to physical, enzymatic and/or chemical (e.g., cross-linking of starch with sodium metaphosphate, primary or secondary sodium phosphates; esterification of starch with acetic anhydride; and/or etherification of starch e.g., with propylene oxide) processing methods. In a preferred embodiment, the starch is a modified starch, preferably selected from distarch phosphate (CAS Nr.: 55963-33-2); distarch phosphate acetate (CAS Nr.: 68130-14-3); hydroxypropyl starch phosphate (CAS Nr.: 113894-92-1; 39346-84-4; 53124-00-8) and sodium hydroxypropyl starch phosphate (CAS Nr.: 221355-22-2), more preferably hydroxypropyl starch phosphate (CAS Nr.: 113894-92-1; 39346-84-4; 53124-00-8). Examples of commercially available starches suitable to be used as thickening agent include STRUCTURE^{®} ZEA starch from Nouryon.

A further suitable thickening agent is carob gum. Carob gum (CAS Nr.: 9000-40-2), also known as locust bean gum or carob, is a natural polysaccharide extracted from the seed of the carob tree, which contains at least 75% galactomannan. Carob gum is commercially available (e.g. GENU^{®} Gum (CAS Nr.: 9000-40-2) from CP Kelco).

A further suitable thickening agent is guar gum. Guar gum (CAS Nr.: 9000-30-0) also called guaran, is a galactomannan polysaccharide extracted from guar beans.

Carrageenan may be also used as a thickening agent. Carrageenan (CAS Nr.: 9000-07-1), also called carrageenin, is a linear sulfated polysaccharide extracted from red edible seaweeds.

Alginic acid is a further suitable thickening agent. Alginic acid (CAS Nr.: 9005-32-7), also called algin, is a polysaccharide extracted from brown algae. Alginic acid is a linear copolymer with homopolymeric blocks of (1→4)-linked β-D-mannuronate and α-L-guluronate residues, respectively, covalently linked together in different sequences or blocks. The alginic acid may be in its free form, or in its salt form, e.g., sodium and/or potassium salt, also known as alginate.

Also a polyalkylene glycol polymer (PAG) may be used as a thickening agent. A PAG is a synthetic product obtained from ethylene oxide, propylene oxide, and/or butylene oxide. The polyalkylene glycol is preferably selected from a polyethylene glycol polymer, a polypropylene glycol polymer, a polyethylene-polypropylene glycol polymer, and mixtures thereof. The polyalkylene glycol polymer has preferably a viscosity of at least 10000 cPs at 25°C and a shear rate of 1 to 100 s⁻¹, such that very small quantities are sufficient for adjusting the viscosity of the ink composition

Preferably, the thickening agent is a starch, or a mixture of above-mentioned thickening agents, wherein one of said thickening agents is a starch, such as a mixture of a starch and a polyalkylene glycol polymer, in particular a polyethylene-polypropylene glycol polymer. The starch is preferably a modified starch, in particular a hydroxypropyl starch phosphate (CAS Nr.: 113894-92-1; 39346-84-4; 53124-00-8).

The screen-printing ink composition further contains from 2.5 wt-% to 4.5 wt-% of an esterquat. The esterquat improves the softening properties of the printed textile, as well as the color vibrancy by increasing the color intensity and the color brightness. As known to the skilled person, an "esterquat" or "ester quat" is a quaternary ammonium salt of an alkanol- and/or alkyl-amine esterified with an average of two fatty acid moieties per molecule. In the ink composition, the esterquat is preferably a compound of formula (I) 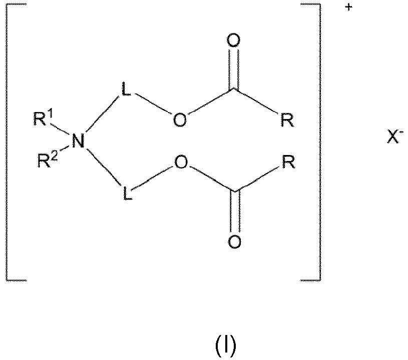 wherein
R-C(O) represents the residue of a fatty acid having from about 12 to about 24, preferably from about 14 to about 22, more preferably from about 16 to 20 carbon atoms;
R¹ is an alkyl group of 1 to 4 carbon atoms,
R² is an alkyl group of 1 to 4 carbon atoms or a hydroxyalkyl group of 1 to 4 carbon atoms,
-L- is an alkylene of 1 to 4 carbon atoms, and
X- is a salt forming anion.
The salt forming cation X- renders the esterquat soluble or dispersible in water, and is preferably selected from a halide, e.g. a chloride, a bromide or an iodide; a sulfate, a methosulfate, a nitrite, a nitrate, a phosphate, and a carboxylate, e.g. an acetate, an adipate, and a proprionate. Examples of suitable commercially available esterquats, include, but are not limited to bis-(oleic isopropyl ester) dimethyl ammonium methosulfate (supplier: Evonik; commercial name: REWOQUAT^{®} CR 3099).

The screen-printing ink composition may further contain a pH adjusting agent and/or a biocide and/or wax of vegetal origin and/or oil of vegetal origin and/or glycerol.

Preferably, the ink composition has a pH value of between 5 and 9. The pH value depends on the stability conditions of the ink composition, as well as on the performance and effect obtained on the fabric. If required, the ink composition may further contain up to 0.5 wt-% a pH adjusting agent. Preferably, the pH adjusting agent is selected from acetic acid, citric acid, ascorbic acid, malic acid, sodium hydroxide etc. Preferably, citric acid is used for adjusting the pH value of the composition in the pH value range from 5 to 7, while acetic acid is used for adjusting the pH value of the composition in the pH value range from 7 to 9.

The ink composition may contain up to 0.5 wt-% of a biocide. The biocide prevents biodeterioration of the textile, assists in preventing spread of infectious diseases without requiring the need for frequent sterilization and ensures the stability of the ink composition for at least 12 months. Any conventionally used biocide in textile industry is suitable to be used in the textile finishing composition according to the present invention. Such biocides include, but are not limited to, 1,2-benzisothiazolin-3-one (commercially available at Zeneca Specialties as a solution sold under the commercial name Proxel GXL), organo-copper compounds, organo-tin compounds, chlorinated phenols, silver-based microbial agents and metal-based inorganic compounds, such as zinc oxide, zinc salts and cupric salts.

The ink composition may further contain a wax of vegetal origin. The wax of vegetal origin improves the wet and dry rubbing fastness of the printed textile fabric, as well as the color vibrancy by increasing the color intensity and the color brightness, and additionally increases the softness of the printed fabric. The wax of vegetal origin is preferably in an amount from 5 wt-% to 15 wt-%, more preferably in an amount from 6 wt-% to 13 wt-%. The term "wax of vegetal origin" encompasses all waxes originating from plants. Examples of suitable vegetable waxes, include, but are not limited to: carnauba wax, soy wax, jojoba wax, candelilla wax, rice-bran wax, sugar cane wax, and mixtures/blends thereof.

As well known in the art, carnauba wax (also called palm wax) is a common plant wax type harvested from the leaves of the plant by drying the leaves and beating them to loosen the wax. The Carnauba wax contains aliphatic esters (approx. 40 wt-%), diesters of 4-hydroxycinnamic acid (approx. 21.0 wt-%), ω-hydroxycarboxytic acids (approx. 13.0 wt-%), and fatty alcohols (approx. 12 wt%). The compounds are predominantly derived from acids and alcohols in the C26-C30 range.

As well known in the art, Candelilla wax is obtained from the small leaves of Candelilla shrubs native to northern Mexico and the southwestern U.S. It is harvested by immersing the whole plant in acidified boiling water. The wax then floats to the surface of the boiling water.

Preferably, the wax of vegetal origin is selected from Candellila wax, Carnauba wax, and mixtures/blends thereof. More preferably, the wax of vegetal origin is a mixture of Candellila wax and Carnauba wax.

The screen-printing ink composition may further contain an oil of vegetal origin, preferably in an amount from 1 wt-% to 4 wt-%, more preferably in an amount from 1.0 wt-% to 2.0 wt-%. The oil of vegetal origin improves the softening and the wicking properties of the printed textile fabric, as well as the color vibrancy by increasing the color intensity and the color brightness. The term "oil of vegetal origin" encompasses any oil or triglyceride extracted from plants, e.g., from fruits or seeds. Examples of suitable oils, include but are not limited to, almond oil, babassu oil, borage oil, canola oil, coconut oil, corn oil (maize oil), cottonseed oil, flaxseed oil, grape seed oil, hazelnut oil, oat oil, olive oil, palm oil, palm kernel oil, peanut oil, rapeseed oil, safflower oil, sesame oil, linseed oil, soybean oil, tucum oil, sunflower oil, walnut oil, apricot oil, sweet almond oil, avocado oil, baobab oil, blueberry seed oil, calendula oil, camellia oil, cherry kernel oil, cranberry seed oil, hemp oil, jojoba oil, kukur nut oil, macadamia nut oil, manketti oil, melon seed oil, moringe oil, peach kernel oil, pistachio oil, raspberry seed oil, rice bran oil, rosehip oil, soya oil, wheat germ oil, yangu oil, algae oil; their hydrogenated derivatives, and mixtures thereof. Preferably the oil of vegetal origin is a mixture of, preferably hydrogenated, oils of vegetal origin. In a preferred embodiment, the oil of vegetal origin is selected from rapeseed oil, linseed oil, algae oil, their hydrogenated derivatives, and mixtures thereof.

The ink composition may further contain glycerol (1,2,3-propanetriol). The used glycerol is preferably of vegetal origin e.g., derived from soybean, coconut, palm or corn oils. The water-miscible glycerol is useful for adjusting the viscosity of the ink composition, and when present in amounts from 10.0 wt-% to 35.0 wt-%, preferably from 15.0 wt-% to 25.0 wt-% in the ink composition promotes the adhesion of the ink on the side of the fabric on which it is printed, and thereby improves the rubbing fastness, and prevents the migration of the ink on the other side of said fabric and the resulting back-staining.

In one preferred embodiment the ink composition contains a wax of vegetal origin as described herein, preferably in an amount from 5.0 wt-% to 15.0 wt-%, more preferably from 6.0 wt-% to 13.0 wt-%, the wt-% being based on the total weight of the ink composition. Advantageously, the wax of vegetal origin improves the wet and dry rubbing fastness of the printed textile fabric, as well as the color vibrancy and the softness of the printed fabric. Thus, a preferred embodiment according to the present invention is directed to a screen-printing ink composition having a viscosity from 1000 to 8000 cPs, preferably from 5000 to 8000 cPs, at 25°C and a shear rate of 1 to 100 s⁻¹, and comprising, preferably consisting of:
- from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of the herein described pigment dispersed within the composition;
- from 0.5 wt-% to 6.0 wt-%, more preferably from 1.0 wt-% to 6.0 wt-%, even more preferably from 2.0 wt-% to 5.0 wt-%, of the herein described water-dispersible binder;
- from 1.5 wt-% to 3.0 wt-% of the herein described surfactant;
- from 3 wt-% to 6 wt-% of the herein described thickening agent;
- from 2.5 wt-% to 4.5 wt-% of the herein described esterquat;
- from 5.0 wt-% to 15.0 wt-%, preferably from 6.0 wt-% to 13.0 wt-%, of the herein described wax of vegetal origin;
- optionally the herein described pH adjusting agent and/or the herein described biocide and/or the herein described oil of vegetal origin and/or glycerol; and
- water.

In one preferred embodiment, the ink compositions contain a wax of vegetal origin, but does not contain an oil of vegetal origin. Hence, a preferred embodiment according to the present invention is directed to a screen-printing composition comprising, preferably consisting of:
- from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of the herein described pigment dispersed within the composition;
- from 0.5 wt-% to 6.0 wt-%, more preferably from 1.0 wt-% to 6.0 wt-%, even more preferably from 2.0 wt-% to 5.0 wt-% of the herein described water-dispersible binder;
- from 1.5 wt-% to 3.0 wt-%, preferably from 2.0 wt-% to 3.0 wt-%, of the herein described surfactant;
- from 3 wt-% to 6 wt-%, preferably from 3 wt-% to 4 wt-%, of the herein described thickening agent;
- from 2.5 wt-% to 4.5 wt-%, preferably from 3 wt-% to 4 wt-%, of the herein described esterquat;
- from 10 wt-% to 13 wt-%, preferably from 10.5 wt-% to 12.5 wt-%, of the herein described wax of vegetal origin;
- optionally the herein described pH adjusting agent and/or the herein described biocide and/or glycerol; and
- water.

In another preferred embodiment, the ink composition contains a wax of vegetal origin and an oil of vegetal origin. Thus, a further preferred ink composition according to the present comprises, preferably consists of:
- from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of the herein described pigment dispersed within the composition;
- from 0.5 wt-% to 6.0 wt-%, more preferably from 1.0 wt-% to 6.0 wt-%, even more preferably from 2.0 wt-% to 5.0 wt-% of the herein described water-dispersible binder;
- from 1.5 wt-% to 3.0 wt-%, preferably from 2.0 wt-% to 2.5 wt-%, of the herein described surfactant;
- from 3.0 wt-% to 6.0 wt-%, preferably from 3.0 wt-% to 4.0 wt-%, of the herein described thickening agent;
- from 2.5 wt-% to 4.5 wt-%, preferably from 2.5 wt-% to 3.25 wt-%, of the herein described esterquat;
- from 5.0 wt-% to 8.0 wt-%, preferably from 6.0 wt-% to 8.0 wt-% of the herein described wax of vegetal origin;
- from 1.0 wt-% to 4.0 wt-%, preferably 1.0 wt-% to 2.0 wt-% of the herein described oil of vegetal origin;
- optionally the herein described pH adjusting agent and/or the herein described biocide and/or glycerol; and
- water.

In a still preferred embodiment, the ink composition contains glycerol, preferably in an amount from 10.0 wt-% to 35.0 wt-%, preferably from 15.0 wt-% to 25.0 wt-%. The 1 ,2,3-propanetriol in the specified amount promotes the adhesion of the ink on the side of the fabric on which it is printed and prevents the migration of the ink on the other side of said fabric and the resulting back-staining. Thus, a further preferred ink composition according to the present invention comprises, preferably consists of:
- from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of the herein described pigment dispersed within the composition;
- from 0.5 wt-% to 6.0 wt-%, more preferably from 1.0 wt-% to 6.0 wt-%, even more preferably from 2.0 wt-% to 5.0 wt-% of the herein described water-dispersible binder;
- from 1.5 wt-% to 3.0 wt-%, preferably from 1.5 wt-% to 2.5 wt-%, of the herein described surfactant;
- from 3.0 wt-% to 6.0 wt-%, preferably from 4.0 wt-% to 6.0 wt-%, more preferably from 4.5 wt-% to 6 wt-%, of the herein described thickening agent;
- from 2.5 wt-% to 4.5 wt-%, preferably from 3.5 wt-% to 4.5 wt-%, of the herein described esterquat;
- from 10.0 wt-% to 35.0 wt-%, preferably from 15.0 wt-% to 25.0 wt-%, more preferably from 17.5 wt-% to 22.5 wt-%, of glycerol;
- optionally the herein described pH adjusting agent and/or the herein described biocide and/or wax of vegetal origin and/or oil of vegetal origin; and
- water. An even more preferred ink composition according to the present invention comprises, preferably consists of:
   - from 1.0 wt-% to 5.0 wt-%, preferably from 1.5 wt-% to 4.5 wt-%, more preferably from 1.75 wt-% to 4.25 wt-%, most preferably from 2.0 wt-% to 4.0 wt-%, of the herein described pigment dispersed within the composition;
   - from 0.5 wt-% to 6.0 wt-%, more preferably from 1.0 wt-% to 6.0 wt-%, even more preferably from 2.0 wt-% to 5.0 wt-%, of the herein described water-dispersible binder;
   - from 1.5 wt-% to 3.0 wt-%, preferably from 1.5 wt-% to 2.5 wt-%, of the herein described surfactant;
   - from 3.0 wt-% to 6.0 wt-%, preferably from 4.0 wt-% to 6.0 wt-%, more preferably from 4.5 wt-% to 6.0 wt-%, of the herein described thickening agent;
   - from 2.5 wt-% to 4.5 wt-%, preferably from 3.5 wt-% to 4.5 wt-%, of the herein described esterquat;
   - from 10.0 wt-% to 35.0 wt-%, preferably from 15.0 wt-% to 25.0 wt-%, more preferably from 17.5 wt-% to 22.5 wt-%, of glycerol;
   - optionally the herein described pH adjusting agent and/or the herein described biocide; and
   - water.

The screen-printing ink composition is suitable for rotary screen printing, or for flat screen printing. In one embodiment, the screen-printing ink composition is a rotary screen printing ink composition. In another embodiment, the screen-printing ink composition is a flat screen printing ink composition.

A **second aspect** according to the present invention relates to an ink set comprising at least three, preferably four, blendable water-based screen-printing ink compositions according to the present invention.

A **third aspect** according to the present invention is directed to a used of a starch, a carob gum, a guar gum, a carrageenan, an alginic acid, a polyalkylene glycol polymer, or a mixture thereof as a thickening agent in a water-based screen printing ink composition for textile fabric.

### Printing process

A **fourth aspect** according to the present invention is directed process for manufacturing a printed, optionally finished, textile fabric comprising, preferably consisting of, the following steps:
a) providing a non-coloured textile fabric;
b) screen printing one or more screen printing compositions on one side of said fabric, or one or more regions of said side, wherein at least one of said screen printing composition is a screen-printing ink composition according to any one of the previous claims;
c) drying the textile by exposure to an air having a temperature from about 120°C to about 140°C for at least 1 min to provide a dried textile; and
d) calendering the textile fabric for at least 10 seconds at a temperature from about 140°C to about 160°C to provide a printed, optionally finished, textile fabric.

Compared to the currently used screen printing processes in textile industry, the present manufacturing process does not require curing and drying steps at high temperature. Hence, the manufacturing process is environmentally friendly in terms of energy consumption, and provides printed, optionally finished, textile fabrics exhibiting excellent rubbing fastness and color development properties in a time-expedient manner that is compatible with the textile industry requirements.

The term "non-coloured textile fabric" refers to a fabric made of fibers that have not been previously contacted with a colorant.

At step b) of the process, one or more screen printing compositions are applied by screen printing on a side of the textile fabric, or on one or more regions of a side of the textile fabric. At least one of said composition is water-based screen-printing ink composition according to the present invention.

As well known in the art, the term "side" refers to the front side or the back side of a textile fabric.

In one embodiment, one or more of the screen-printing compositions applied at step b) are textile finishing compositions. Preferably, the textile finishing compositions are selected from the group consisting of textile softening compositions, water-repellent textile finishing compositions, and textile finishing compositions for improving the wicking properties. The textile finishing compositions described herein are particularly suitable to be used in the present manufacturing process.

Preferably, the textile finishing compositions are printed after the screen-printing ink compositions.

At step c) of the present process, the textile fabric obtained at step b) is subjected to drying to evaporate the water contained in the compositions and furnish a dried textile. This step is achieved by exposure of the printed textile to an air having a temperature from about 120°C to about 140°C for at least 1 minute. The exposure time depends on the surface density (g/m²), which is typically from 15 g/m² to 25 g/m², of the wet deposited composition(s) and the temperature and is preferably lower than 5 minutes, more preferably lower than 4 minutes, e.g., 3 minutes, and meets the speed-requirements of the industrial manufacturing processes for textiles.

The dried textile is subsequently calendered for at least 10 seconds, preferably for about 30 seconds, at a temperature from about 140°C to about 160°C to provide the printed, optionally finished, textile fabric. Preferably, the dried textile is calendered for less than 5 minutes, more preferably for less than 4 minutes, e.g., 3 minutes. The pressure of the calender can be adjusted between 0 and 6 bars so that the rolls of the calender are in contact with the dried textile. Preferably, the pressures applied during the calendering step are from 1 to 3 bars. This step ensures the fixation of the pigment, and if present of the finishing agent, to the textile fibers.

Preferably, steps a), b), c) and d) of the manufacturing process are carried out continuously. In such case, the units for the screen printing, the drying and the fixing are mounted one after another and the textile is moved through them continuously. The units for steps a), b), c) and d) can also be combined in a single machine. The textile is transported continuously through the machine and is thus in the finished state when it leaves the machine.

The present process may be conducted using a commercially available industrial scree printing machine (e.g., rotary or flat) and a calender (rotary heat press roll to roll).

A **fifth aspect** according to the present invention relates to a process for manufacturing a garment comprising the step of converting the printed, optionally finished, textile fabric into a garment. The garment may be e.g., a pant, a jacket, a shirt, a skirt, a dress, or a scarf.

### Screen printing finishing composition

A **sixth aspect** according to the present invention is directed to a screen printing finishing composition. The composition has a viscosity from 1000 to 8000 cPs, preferably from 5000 to 8000 cPs, at 25°C and a shear rate of 1 to 100 s⁻¹, and comprises, preferably consists of:
- from 2.0 wt-% to 3.5 wt-% of a surfactant;
- from 3.0 wt-% to 6.0 wt-% of a thickening agent selected from a starch, a carob gum, a guar gum, a carrageenan, an alginic acid, a polyalkylene glycol polymer, and mixtures thereof, preferably selected from a starch, a carob gum, a polyalkylene glycol polymer, and mixtures thereof, more preferably selected from a starch, a polyalkylene glycol polymer, and mixtures thereof;
- from 3.0 wt-% to 5.0 wt-% of an esterquat;
- optionally a pH adjusting agent and/or a biocide and/or a wax of vegetal origin and/or an oil of vegetal origin and/or glycerol; and
- water; wherein the wt-% are based on the total weight of the composition.
Advantageously, the majority of the ingredients contained by the composition are natural and biodegradable. Further, the composition does not contain silicones and fluorinated compounds (i.e., is silicone- and fluorine-free). Silicones and fluorinated compounds are typically used in softening and water-repellent finishing compositions and are known to be non-biodegradable and even toxic. The screen-printing finishing composition may be used as a textile finishing composition for imparting to the textile softness, water-repellence and/or improved wicking properties, and does not modify the textile color (the composition per se is colorless i.e., no color is detectable by the naked eye, and following fixation does not modify the color of the treated textile) and the hand of the textile.

As well known to the skilled person, a finishing composition is a colorless composition (i.e., pigment- and dye-free composition) containing one or more finishing agents. Finishing agents are substances that change a property, other than a color, of a textile. The properties imparted to the textile depend on the finishing agent contained by the finishing composition.

The term "silicone-free composition" refers to a composition that does not contain a silicone/polysiloxane. As used herein, the term "silicone" and "polysiloxane" encompasses all polymers containing a polysiloxane moiety including, but not limited to, silicones/polysiloxanes oils, modified polysiloxanes, such as epoxy or/and amino-modified polysiloxanes, and polyether-modified polysiloxanes, and linear multiblock polysiloxane copolymers.

The term "fluorine-free composition" refers to a composition that does not contain a fluorinated compound, such as a per- or polyfluoroalkyl substance (PFAS).

The water-based screen-printing finishing composition contains from 2.0 wt-% to 3.5 wt-% of a surfactant.

The term "surfactant" is known in the field. It particularly includes compounds that reduce surface tension and / or improve dispersion properties. A person skilled in the art is in a position to identify surfactants suitable for compositions printable by screen printing. The term includes cationic, anionic, non-ionic and zwitterionic surfactants. Preferably, the surfactant is biodegradable and/or obtained from renewable raw materials. Examples of suitable commercially available surfactants include, but are not limited to, rhamnolipids (e.g. biosurfactant REWOFERM^{®} RL 100 commercially available from Evonik), sophorolipids (e.g. biosurfactant REWOFERM^{®} SL ONE commercially available from Evonik), sorbitane monooleate (commercially available under the commercial name Span^{®} 80 from Sigma Aldrich), polyethylene glycol sorbitan monooleate (e.g. Tween^{®} 80 commercially available from Sigma Aldrich), sodium dioctylsulfosuccinate, ethoxylated 2,4,7,9-tetramethyl-5-decyne-4,7-diol, ethoxylated fatty alcohols (e.g. ethoxylated cetyl-stearyl alcohol (Eco Brij CS20) commercially available from Croda), alkyl glycosides (e.g., lauryl glucoside), and mixtures thereof (e.g. Surfinol^{®} PSA 336 commercially available from Evonik which is a blend of sodium dioctylsulfosuccinate and ethoxylated 2,4,7,9-tetramethyl-5-decyne-4,7-diol).

The surfactant is preferably a mixture of surfactants, more preferably a mixture of surfactants, wherein one of said surfactants is lauryl glucoside. The lauryl glucoside is preferably of vegetal origin (e.g., derived from palm kernel oil, corn sugar, or coconut). The mixture of surfactants may further contain Span^{®} 80 (sorbitane monooleate) and/or Tween^{®} 80 (polyethylene glycol sorbitan monooleate) and/or Eco Brij CS20 (ethoxylated cetyl-stearyl alcohol) and/or Surfinol^{®} PSA 336 (blend of sodium dioctylsulfosuccinate and ethoxylated 2,4,7,9-tetramethyl-5-decyne-4,7-diol). In preferred embodiments, the surfactant is a mixture of Span^{®} 80 (sorbitane monooleate), Tween^{®} 80 (polyethylene glycol sorbitan monooleate), Eco Brij CS20 (ethoxylated cetyl-stearyl alcohol) and lauryl glucoside. In further preferred embodiments, the surfactant is a mixture of Span^{®} 80 (sorbitane monooleate), Tween^{®} 80 (polyethylene glycol sorbitan monooleate), Surfinol^{®} PSA 336 (blend of sodium dioctylsulfosuccinate and ethoxylated 2,4,7,9-tetramethyl-5-decyne-4,7-diol) and lauryl glucoside. The ink composition preferably contains an amount from 1.0 wt-% to 1.75 wt-% of lauryl glucoside.

The textile screen printing finishing composition further contains from 3.0 wt-% to 6.0 wt-% of a **thickening agent.** As well known to the skilled person, a thickening agent or a thickener is a substance that increases the viscosity of a composition without substantially changing its other properties. A person skilled in the art is in a position to adjust the amount of the thickening agent so as to obtain the viscosity required for the composition.

The inventor has found that a starch, a carob gum, a guar gum, a carrageenan, an alginic acid, a polyalkylene glycol polymer, and mixtures thereof are particularly useful as thickening agent for screen printing finishing compositions for textile. Hence, within the present invention, the thickening agent is selected from a starch, a carob gum, a guar gum, a carrageenan, an alginic acid, a polyalkylene glycol polymer, and mixtures thereof, preferably from a starch, a carob gum, a polyalkylene glycol polymer, and mixtures thereof, more preferably from a starch, a polyalkylene glycol polymer, and mixtures thereof. Advantageously, the thickening agent used herein is commercially available, easily dispersible in water upon mixing, and generally of natural origin and biodegradable.

As used herein, the term "starch" encompasses the native starch (i.e. polysaccharide obtained from plants generally containing 20- 25 wt-% of amylose and 75-80 wt-% amylopectin by weight) and the modified starch (i.e. obtained by subjecting the native starch to physical, enzymatic and/or chemical (e.g., cross-linking of starch with sodium metaphosphate, primary or secondary sodium phosphates, esterification of starch with acetic anhydride and/or etherification of starch with propylene oxide) processing methods. In a preferred embodiment, the starch is a modified starch, preferably selected from distarch phosphate (CAS Nr.: 55963-33-2); distarch phosphate acetate (CAS Nr.: 68130-14-3); hydroxypropyl starch phosphate (CAS Nr.: 113894-92-1; 39346-84-4; 53124-00-8) and sodium hydroxypropyl starch phosphate (CAS Nr.: 221355-22-2), more preferably hydroxypropyl starch phosphate (CAS Nr.: 113894-92-1; 39346-84-4; 53124-00-8). Examples of commercially available starches include STRUCTURE^{®} ZEA starch from Nouryon.

A further suitable thickening agent is carob gum. Carob gum (CAS Nr.: 9000-40-2), also known as locust bean gum or carob, is a natural polysaccharide extracted from the seed of the carob tree, which contains at least 75% galactomannan. Carob gum is commercially available (e.g. GENU^{®} Gum (CAS Nr.: 9000-40-2) from CP Kelco).

A further suitable thickening agent is guar gum. Guar gum (CAS Nr.: 9000-30-0) also called guaran, is a galactomannan polysaccharide extracted from guar beans.

Carrageenan may be also used as a thickening agent. Carrageenan (CAS Nr.: 9000-07-1), also called carrageenin, is a linear sulfated polysaccharide extracted from red edible seaweeds.

Alginic acid is a further suitable thickening agent. Alginic acid (CAS Nr.: 9005-32-7), also called algin, is a polysaccharide extracted from brown algae. Alginic acid is a linear copolymer with homopolymeric blocks of (1→4)-linked β-D-mannuronate and α-L-guluronate residues, respectively, covalently linked together in different sequences or blocks. The alginic acid may be in its free form, or in its salt form, e.g., sodium and/or potassium salt, also known as alginate.

Also a polyalkylene glycol polymer (PAG) may be used as a thickening agent. A PAG is a synthetic product obtained from ethylene oxide, propylene oxide, and/or butylene oxide. The polyalkylene glycol is preferably selected from a polyethylene glycol polymer, a polypropylene glycol polymer, a polyethylene-polypropylene glycol polymer, and mixtures thereof. The polyalkylene glycol polymer has preferably a viscosity of at least 10000 cPs at 25°C and a shear rate of 1 to 100 s⁻¹, such that very small quantities are sufficient for adjusting the viscosity of the finishing composition.

Preferably, the thickening agent is a starch, or a mixture of above-mentioned thickening agents, wherein one of said thickening agents is a starch, such as a mixture of a starch and a polyalkylene glycol polymer, in particular a polyethylene-polypropylene glycol polymer. The starch is preferably a modified starch, in particular a hydroxypropyl starch phosphate (CAS Nr.: 113894-92-1; 39346-84-4; 53124-00-8).

The textile screen printing finishing composition further contains from 3.0 wt-% to 5.0 wt-% of an **esterquat.** The esterquat improves the softening properties of the finished textile. As known to the skilled person, an "esterquat" or "ester quat" is a quaternary ammonium salt of an alkanol- and/or alkyl-amine esterified with an average of two fatty acid moieties per molecule. In the ink composition, the esterquat is preferably a compound of formula (I) 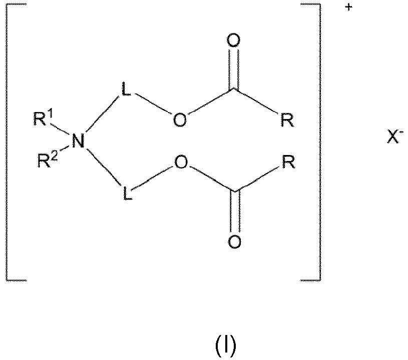 wherein
R-C(O) represents the residue of a fatty acid having from about 12 to about 24, preferably from about 14 to about 22, more preferably from about 16 to 20 carbon atoms;
R¹ is an alkyl group of 1 to 4 carbon atoms,
R² is an alkyl group of 1 to 4 carbon atoms or a hydroxyalkyl group of 1 to 4 carbon atoms,
-L- is an alkylene of 1 to 4 carbon atoms, and
X- is a salt forming anion.
The salt forming cation X- renders the esterquat soluble or dispersible in water, and is preferably selected from a halide, e.g. a chloride, a bromide or an iodide; a sulfate, a methosulfate, a nitrite, a nitrate, a phosphate, and a carboxylate, e.g. an acetate, an adipate, a proprionate. Examples of suitable commercially available esterquats, include, but are not limited to bis-(oleic isopropyl ester) dimethyl ammonium methosulfate (supplier: Evonik; commercial name: REWOQUAT^{®} CR 3099).

The textile screen printing finishing composition may further contain a pH adjusting agent and/or a biocide and/or wax of vegetal origin and/or oil of vegetal origin and/or glycerol.

Preferably, the finishing composition has a pH value of between 5 and 9. The pH value depends on the stability conditions of the ink composition, as well as on the performance and effect obtained on the fabric. If required, the finishing composition may further contain up to 0.5 wt-% the herein described pH adjusting agent.

The finishing composition may contain up to 0.5 wt-% of a biocide. The biocide prevents biodeterioration of the textile, assists in preventing spread of infectious diseases without requiring the need for frequent sterilization and ensures the stability of the ink composition for at least 12 months. Any conventionally used biocide in textile industry is suitable to be used in the textile finishing composition according to the present invention. Such biocides include, but are not limited to, 1,2-benzisothiazolin-3-one (commercially available at Zeneca Specialties as a solution sold under the commercial name Proxel GXL), organo-copper compounds, organo-tin compounds, chlorinated phenols, silver-based microbial agents and metal-based inorganic compounds, such as zinc oxide, zinc salts and cupric salts.

The ink composition may further contain a wax of vegetal origin. The wax of vegetal origin improves the wet and dry rubbing fastness, as well as the softness of the finished textile fabric. Further, when used in appropriate amounts, the wax of vegetal origin renders the textile water-repellent. The wax of vegetal is preferably in an amount from 5.0 wt-% to 15.0 wt-%, more preferably from 7.0 wt-% to 14.0 wt-%, the wt-% being based on the total weight of the composition.

The term "wax of vegetal origin" encompasses all waxes originating from plants. Examples of suitable vegetable waxes, include, but are not limited to: carnauba wax, soy wax, jojoba wax, candelilla wax, rice-bran wax, sugar cane wax, and mixtures/blends thereof.

As well known in the art, carnauba wax (also called palm wax) is a common plant wax type harvested from the leaves of the plant by drying the leaves and beating them to loosen the wax. The Carnauba wax contains aliphatic esters (approx. 40 wt-%), diesters of 4-hydroxycinnamic acid (approx. 21.0 wt-%), ω-hydroxycarboxytic acids (approx. 13.0 wt-%), and fatty alcohols (approx. 12 wt%). The compounds are predominantly derived from acids and alcohols in the C26-C30 range.

As well known in the art, Candelilla wax is obtained from the small leaves of Candelilla shrubs native to northern Mexico and the southwestern U.S. It is harvested by immersing the whole plant in acidified boiling water. The wax then floats to the surface of the boiling water.

Preferably, the wax of vegetal origin is selected from Candellila wax, Carnauba wax, and mixtures/blends thereof. More preferably, the wax of vegetal origin is a mixture of Candellila wax and Carnauba wax.

The screen printing ink composition may further contain an oil of vegetal origin, preferably in an amount from 1.0 wt-% to 4.0 wt-%, more preferably in an amount from 1.0 wt-% to 2.0 wt-%. The oil of vegetal origin improves the softening and the wicking properties of the printed textile fabric. The term "oil of vegetal origin" encompasses any oil or triglyceride extracted from plants, e.g., from fruits or seeds. Examples of suitable oils, include but are not limited to, almond oil, babassu oil, borage oil, canola oil, coconut oil, corn oil (maize oil), cottonseed oil, flaxseed oil, grape seed oil, hazelnut oil, oat oil, olive oil, palm oil, palm kernel oil, peanut oil, rapeseed oil, safflower oil, sesame oil, linseed oil, soybean oil, tucum oil, sunflower oil, walnut oil, apricot oil, sweet almond oil, avocado oil, baobab oil, blueberry seed oil, calendula oil, camellia oil, cherry kernel oil, cranberry seed oil, hemp oil, jojoba oil, kukur nut oil, macadamia nut oil, manketti oil, melon seed oil, moringe oil, peach kernel oil, pistachio oil, raspberry seed oil, rice bran oil, rosehip oil, soya oil, wheat germ oil, yangu oil, algae oil; their hydrogenated derivatives, and mixtures thereof. Preferably the oil of vegetal origin is a mixture of, preferably hydrogenated, oils of vegetal origin. In a preferred embodiment, the oil of vegetal origin is selected from rapeseed oil, linseed oil, algae oil, their hydrogenated derivatives, and mixtures thereof, preferably from linseed oil, algae oil, their hydrogenated derivatives, and mixtures thereof.

The ink composition may further contain glycerol (1,2,3-propanetriol). The used glycerol is preferably of vegetal origin e.g., derived from soybean, coconut, palm or corn oils. The water-miscible glycerol is useful for adjusting the viscosity of the finishing composition, and when present in amounts from 10.0 wt-% to 35.0 wt-%, preferably in amounts from 15.0 wt-% to 25.0 wt-%, in the finishing composition promotes the adhesion of the composition on the side of the fabric on which it is printed and prevents the migration of the composition on the other side of said fabric.

In one preferred embodiment the finishing composition contains a wax of vegetal origin as described herein, preferably in an amount from in an amount from 5.0 wt-% to 15.0 wt-%, preferably from 7.0 wt-% to 14.0 wt-%, the wt-% being based on the total weight of the finishing composition. Advantageously, the wax of vegetal origin improves the wet and dry rubbing fastness and the softness of the finished textile fabric. Thus, a preferred embodiment according to the present invention is directed to a screen-printing finishing composition having a viscosity from 1000 to 8000 cPs, preferably from 5000 to 8000 cPs, at 25°C and a shear rate of 1 to 100 s⁻¹, and comprising, preferably consisting of:
- from 2.0 wt-% to 3.5 wt-% of the herein described surfactant;
- from 3.0 wt-% to 6.0 wt-%, preferably from 3.0 wt-% to 5.0 wt-%, of the herein described thickening agent;
- from 3.0 wt-% to 5.0 wt-% of the herein described esterquat;
- from 5.0 wt-% to 15.0 wt-%, preferably from 7.0 wt-% to 14.0 wt-%, of the herein described wax of vegetal origin;
- optionally a pH adjusting agent and/or a biocide and/or an oil of vegetal origin and/or glycerol; and
- water; wherein the wt-% are based on the total weight of the composition.

In one preferred embodiment, the finishing composition contains a wax of vegetal origin in an amount from 10 wt-% to 15 wt-%, but does not contain an oil of vegetal origin. Such finishing composition provides water-repellent properties to the finished textile, but does not modify the hand of the textile. Hence, a preferred embodiment according to the present invention is directed to a screen-printing finishing composition comprising, preferably consisting of:
- from 2.0 wt-% to 3.5 wt-%, preferably from 2.5 wt-% to 3.5 wt-%, of the herein described surfactant;
- from 3.0 wt-% to 6.0 wt-%, preferably from 3.0 wt-% to 5.0 wt-%, of the herein described thickening agent;
- from 3.0 wt-% to 5.0 wt-%, preferably from 4 wt-% to 5 wt-%, of the herein described esterquat;
- from 10.0 wt-% to 15.0 wt-%, preferably from 11.0 wt-% to 14 wt-%, of the herein described wax of vegetal origin;
- optionally a pH adjusting agent and/or a biocide and/or glycerol; and
- water; wherein the wt-% are based on the total weight of the composition.

In another preferred embodiment, the finishing composition contains a wax of vegetal origin and an oil of vegetal origin. Such finishing composition provides wicking properties to the finished textile, without modifying the handle of the textile. Thus, a further preferred finishing composition according to the present comprises, preferably consists of:
- from 2.0 wt-% to 3.5 wt-%, preferably from 2.0 wt-% to 3.0 wt-%, of the herein described surfactant;
- from 3.0 wt-% to 6.0 wt-%, preferably from 3.0 wt-% to 5.0 wt-%, of the herein described thickening agent;
- from 3.0 wt-% to 5.0 wt-%, preferably from 3.0 wt-% to 4.0 wt-%, of the herein described esterquat;
- from 5.0 wt-% to 10.0 wt-%, preferably from 6.0 wt-% to 9.0 wt-%, of the herein described wax of vegetal origin;
- from 1.0 wt-% to 4.0 wt-%, preferably from 1.0 wt-% to 2.0 wt-% of the herein described oil of vegetal origin;
- optionally a pH adjusting agent and/or a biocide and/or glycerol; and
- water; wherein the wt-% are based on the total weight of the composition.

In a still preferred embodiment, the ink composition contains glycerol, preferably in an amount from 10.0 wt-% to 35.0 wt-%, more preferably in an amount from 15.0 wt-% to 25.0 wt-%. The 1,2,3-propanetriol in the specified amount promotes the adhesion of the composition on the side of the fabric on which it is printed and prevents the migration of the composition on the other side of said fabric. Such composition is particularly useful for imparting excellent softening properties to the finished textile. Thus, a further preferred finishing composition according to the present invention comprises, preferably consists of:
- from 2.0 wt-% to 3.5 wt-%, preferably from 2.0 wt-% to 3.0 wt-%, of the herein described surfactant;
- from 3.0 wt-% to 6.0 wt-%, preferably from 4.0 wt-% to 6.0 wt-%, of the herein described thickening agent;
- from 3.0 wt-% to 5.0 wt-%, preferably from 4.0 wt-% to 5.0 wt-%, of the herein described esterquat;
- from 10.0 wt-% to 35.0 wt-%, preferably from 15 wt-% to 25 wt-%, of glycerol;
- optionally a pH adjusting agent and/or a biocide; and
- water; wherein the wt-% are based on the total weight of the composition.

The screen printing finishing composition is suitable for rotary screen printing, or for flat screen printing.

A **seventh aspect** according to the present invention is directed to a process for finishing a textile fabric. The finishing process comprises, preferably consisting of, the following steps:
i) providing a textile fabric;
ii) screen printing one or more screen printing compositions on one side of said fabric, or one or more regions of said side, wherein at least one of said screen printing composition is a textile screen printing finishing composition as described herein;
iii) drying the textile by exposure to an air having a temperature from about 120°C to about 140°C for at least 1 min to provide a dried textile; and
iv) calendering the textile fabric for at least 10 seconds at a temperature from about 140°C to about 160°C to provide a finished textile fabric.

At step iii) of the present process, the textile fabric obtained at step ii) is subjected to drying to evaporate the water contained in the textile finishing compositions and furnish a dried textile. This step is achieved by exposure of the printed textile to an air having a temperature from about 120°C to about 140°C for at least 1 minute. The exposure time depends on the surface density (g/m²) of the wet deposited composition(s) and the temperature and is preferably lower than 5 minutes, more preferably lower than 4 minutes, e.g., 3 minutes, and meets the speed-requirements of the industrial manufacturing processes for textiles.

The dried textile is subsequently calendered for at least 10 seconds, preferably for about 30 seconds, at a temperature from about 140°C to about 160°C to provide the printed, optionally finished, textile fabric. Preferably, the dried textile is calendered for less than 5 minutes, more preferably for less than 4 minutes, e.g., 3 minutes. The pressure of the calender can be adjusted between 0 and 6 bars so that the rolls of the calender are in contact with the dried textile. Preferably, the pressures applied during the calendering step are from 1 to 3 bars. This step ensures the fixation of the pigment, and if present of the finishing agent, to the textile fibers.

Preferably, steps i), ii), iii) and iv) of the manufacturing process are carried out continuously. In such case, the units for the screen printing, the drying and the fixing are mounted one after another and the textile is moved through them continuously. The units for steps i), ii), iii) and iv) can also be combined in a single machine. The textile is transported continuously through the machine and is thus in the finished state when it leaves the machine.

The present process may be conducted using a commercially available industrial scree printing machine (e.g., rotary or flat) and a calender (rotary heat press roll to roll).

### Clauses

#1. A silicone-free and fluorine-free textile screen printing finishing composition for textile fabric, wherein said composition has a viscosity from 1000 to 8000 cPs, preferably from 5000 to 8000 cPs, at 25°C and a shear rate of 1 to 100 s⁻¹, and comprises, preferably consists of:
   - from 2.0 wt-% to 3.5 wt-% of a surfactant;
   - from 3 wt-% to 6 wt-% of a thickening agent selected from starch, carob gum, guar gum, carrageenan, alginic acid, a polyalkylene glycol, and mixtures thereof;
   - from 3.0 wt-% to 5.0 wt-% of an esterquat;
   - optionally a pH adjusting agent and/or a biocide and/or a wax of vegetal origin and/or an oil of vegetal origin and/or glycerol; and
   - water;
   wherein the wt-% are based on the total weight of the composition.
#2. The textile screen printing finishing composition according to #1, wherein the finishing composition contains a wax of vegetal origin.
#3. The textile screen printing finishing composition according to claim 2, wherein the wax of vegetal is in an amount from 5.0 wt-% to 15.0 wt-%, preferably from 7.0 wt-% to 14.0 wt-%, the wt-% being based on the total weight of the composition.
#4. The textile screen printing finishing composition according to #2 or #3, wherein the wax of vegetal origin is a mixture of Candellila wax and Carnauba wax.
#5. The textile screen printing finishing composition according to any one of #1 to #4, wherein the finishing composition contains an oil of vegetal origin.
#6. The textile screen printing finishing composition according to #5, wherein the oil of vegetal origin is in an amount from 1.0 wt-% to 4.0 wt-%, preferably from 1.0 wt-% to 2 wt-%, the wt-% being based on the total weight of the composition.
#7. The textile screen printing finishing composition according to any one of #1 to #6, wherein the thickening agent is a starch, or a mixture of thickening agents, wherein one of said thickening agents is a starch.
#8. The textile screen printing finishing composition according to any one of #1 to #7, wherein the surfactant is a mixture of surfactants, wherein one of said surfactants is lauryl glucoside.
#9. The textile screen printing finishing composition according to any one of the #1 to #8, wherein the screen-printing finishing composition is a rotary screen printing finishing composition, or a flat screen printing finishing composition.
#10. A process for finishing a textile fabric comprising, preferably consisting of, the following steps:
   i) providing a textile fabric;
   ii) screen printing one or more screen printing compositions on one side of said fabric, or one or more regions of said side, wherein at least one of said screen printing composition is a textile screen printing finishing composition according to any one of #1 to #9;
   iii) drying the textile by exposure to an air having a temperature from about 120°C to about 140°C for at least 1 min to provide a dried textile; and
   iv) calendering the textile fabric for at least 10 seconds at a temperature from about 140°C to about 160°C to provide a finished textile fabric.
#11. The process according to #10, wherein the textile fabric contains synthetic and/or natural fibers, preferably selected from silk fibers, cellulose fibers, elastane fibers, polyamide fibers and polyester fibers.
#12. The process according to #10 or #11, wherein textile screen printing finishing composition is selected from the group consisting of a textile softening composition, a water-repellent textile finishing composition, and a textile finishing compositions for improving the wicking properties.
#13. Use of a starch, a carob gum, a guar gum, a carrageenan, an alginic acid, a polyalkylene glycol polymer, or a mixture thereof as a thickening agent in a textile screen printing finishing composition.

### EXAMPLES

To further illustrate the invention, the following examples are provided. These examples are provided with no intend to limit the scope of the invention.

**Table 1: Ingredients**

| Ingredient | Commercial Name / Supplier | |
|---|---|---|
| **Pigment** | Pigment Black 7 (Carbon Black)(K) | |
| | Pigment Blue (PB)15:3 (C) | |
| | Pigment Red (PR)184 (M) | |
| | Pigment Yellow (PY)155 (Y) | |
| **Biocide** | Proxel^{™} GXL | 20% aqueous dipropylene glycol solution of 1,2-benzisothiazolin-3-one |
| **Surfactant** | Surfinol^{®} PSA 336 (Evonik) | Blend of sodium dioctylsulfo succinate and ethoxylated 2,4,7,9-tetramethyl-5-decyne-4,7-diol surfactants |
| | Span^{®} 80 (Sigma Aldrich) | (Z)-Sorbitan-mono-9-octadecenoat (CAS Nr.: 1338-43-8) |
| | Tween^{®} 80 (Sigma Aldrich) | Polyoxyethylen-Sorbitan-Monooleat (CAS Nr.: 9005-65-6) |
| | Eco Brij CS20 (Croda) | Ethoxylated cetyl-stearyl alcohol (CAS Nr. 68439-49-6) |
| | Lauryl glucoside | Dodecyl β-D-glucopyranoside (CAS Nr. 59122-55-3) |
| **Glycerol** | Pricerine^{™} 9091 (Croda) | vegetal 1,2,3-propanetriol (CAS Nr. 56-81-5) |
| **Water-dispersible binder** | PIDICRYL BINDER 5555 (Pidilite Industries) | Aqueous-based acrylic copolymer resin with anionic character (39 wt-% solid content; Viscosity [on BF-RVT, SPL-4, RPM-20 at 30°C]: 10 - 1000 cPs) |
| **Thickening agent** | STRUCTURE^{®} ZEA Starch (Nouryon) | Hydroxypropyl Starch Phosphate (modified maize starch) |
| | Polyglykol P41/3000 (Clariant) | Ethylene/propylene oxide copolymer (CAS Nr.: 58205-99-5); Molecular weight: approximately 14,800 g/mol; Viscosity: approx. 3,000 mPa.s (50°C) (Method: DIN 51562) corresponding to approx. 11200 mPa.s at 25°C and a shear rate of 1 to 100 s⁻¹ as measured with a rheometer BROOKFLIED DVN, flat cone, 50 RPM. |
| **Wax of vegetal origin** | Candelilla wax | CAS Nr.: 8006-44-8 |
| | Carnauba wax | CAS Nr.: 8015-86-9 |
| **Oil of vegetal origin** | BST-001 (Beyond Surface Technologies - Muttenz) | Linseed oil |
| | BST-020 (Beyond Surface Technologies - Muttenz) | Algae oil |

### I. Preparation of dispersions D1 to D3

The following four dispersions were prepared by mixing for 30 minutes using a high-speed disperser the ingredients shown in Table 2.

**Table 2: Composition dispersions D1-D3**

| | **D1** | **D2** | **D3** |
|---|---|---|---|
| **Esterquat** | | | |
| REWOQUAT | 4.94 | 3.46 | 4.94 |

| **Surfactant** | | | |
|---|---|---|---|
| Span 80 | 0.1 | 0.07 | 0.1 |
| Tween 80 | 0.39 | 0.28 | 0.39 |
| Eco Brij CS20 | 1.13 | 0.68 | |
| Surfinol^{®} PSA 336 | | | 0.2 |

| **Wax of vegetal origin** | | | |
|---|---|---|---|
| Candellila wax | 11.07 | 6.64 | |
| Carnauba wax | 2.82 | 1.69 | 0 |

| **Thickening agent** | | | |
|---|---|---|---|
| P41/3000 | | | 2.2 |

| **Oil of vegetal origin** | | | |
|---|---|---|---|
| Linseed oil | | 0.26 | |
| Algae oil | | 1.49 | |

| **Biocide** | | | |
|---|---|---|---|
| Proxel^{™} GXL | | 0.07 | 0.1 |

| **pH adjusting agent** | | | 0.06 |
|---|---|---|---|
| NaOH | | | |
| **Glycerol** | | 2.66 | 25 |
| **Water** | balance | | |

### II. Preparation of screen-printing ink compositions I1-I12 according to the invention and comparative inks C1-C4

Starting from the dispersions D1 - D3 depicted by Table 2, the screen-printing ink compositions 11-112 were prepared by adding a pigment, a binder, a thickener, and lauryl glucoside to said dispersions and mixing for 30 minutes with a high-speed dispenser. The viscosity was measured at 25°C and a shear rate of 200s-1 with a rheometer BROOKFLIED DVN, flat cone, 50 RPM.

**Table 3: Compositions inks I1-I4 prepared from dispersion D1, I5 - I8 prepared from dispersion D2, and I9-I12 prepared from dispersion D3**

| | **I1** | **I2** | **I3** | **I4** | **I5** | **I6** | **I7** | **I8** | **I9** | **I10** | **I11** | **I12** |
|---|---|---|---|---|---|---|---|---|---|---|---|---|
| **Pigment** | | | | | | | | | | | | |
| Blue 15:3 (C) | 3 | | | | 3 | | | | 3 | | | |
| Red 184 (M) | | | 3 | | | | 3 | | | | 3 | |
| Yellow 155 (Y) | | 2 | | | | 2 | | | | 2 | | |
| Black 7 (K) | | | | 4 | | | | 4 | | | | 4 |

| **Binder** | | | | | | | | | | | | |
|---|---|---|---|---|---|---|---|---|---|---|---|---|
| Pidicryl binder 5555 | 9 | 6 | 9 | 12 | 9 | 6 | 9 | 12 | 9 | 6 | 9 | 12 |
| Non volatile-content | 3.51 | 2.34 | 3.51 | 4.68 | 3.51 | 2.34 | 3.51 | 4.68 | 3.51 | 2.34 | 3.51 | 4.68 |

| **Esterquat** | | | | | | | | | | | | |
|---|---|---|---|---|---|---|---|---|---|---|---|---|
| REWOQUAT | 4.11 | 4.30 | 4.11 | 3.92 | 2.88 | 3.01 | 2.88 | 2.75 | 4.11 | 4.30 | 4.11 | 3.92 |

| **Surfactant** | | | | | | | | | | | | |
|---|---|---|---|---|---|---|---|---|---|---|---|---|
| Span 80 | 0.08 | 0.08 | 0.08 | 0.08 | 0.06 | 0.06 | 0.06 | 0.06 | 0.08 | 0.08 | 0.08 | 008 |
| Tween 80 | 0.33 | 0.34 | 0.33 | 0.31 | 0.23 | 0.24 | 0.23 | 0.22 | 0.33 | 0.34 | 0.33 | 0.31 |
| Eco Brij CS20 | 0.94 | 0.98 | 0.94 | 0.90 | 0.56 | 0.59 | 0.56 | 0.54 | | | | |
| Surfinol^{®} PSA 336 | | | | | | | | | 0.17 | 0.17 | 0.17 | 0.16 |
| Lauryl Glucoside | 1.41 | 1.47 | 1.41 | 1.34 | 1.41 | 1.47 | 1.41 | 1.34 | 1.41 | 1.47 | 1.41 | 1.34 |

| **Thickening agent** | | | | | | | | | | | | |
|---|---|---|---|---|---|---|---|---|---|---|---|---|
| Hydroxypropyl Starch Phosphate | 3.34 | 3.50 | 3.34 | 3.19 | 3.34 | 3.50 | 3.34 | 3.19 | 3.34 | 3.50 | 3.34 | 3.19 |
| P41/3000 | | | | | | | | | 1.83 | 1.91 | 1.83 | 1.75 |

| **Wax** | | | | | | | | | | | | |
|---|---|---|---|---|---|---|---|---|---|---|---|---|
| Candellila wax | 9.21 | 9.63 | 9.21 | 8.79 | 5.53 | 5.78 | 5.53 | 5.28 | | | | |
| Carnauba wax | 2.35 | 2.46 | 2.35 | 2.24 | 1.41 | 1.47 | 1.41 | 1.34 | | | | |
| **Oil** | | | | | | | | | | | | |
| Linseed oil | | | | | 0.22 | 0.23 | 0.22 | 0.21 | | | | |
| Algae oil | | | | | 1.24 | 1.30 | 1.24 | 1.18 | | | | |

| **Biocide** | | | | | | | | | | | | |
|---|---|---|---|---|---|---|---|---|---|---|---|---|
| Proxel^{™} GXL | | | | | 0.06 | 0.06 | 0.06 | 0.06 | 0.08 | 0.08 | 0.08 | 008 |
| **Glycerol** | | | | | 0.22 | 0.23 | 0.22 | 0.21 | 20.81 | 21.76 | 20.81 | 1987 |

| **pH adjusting agent** | | | | | | | | | | | | |
|---|---|---|---|---|---|---|---|---|---|---|---|---|
| NaOH | | | | | | | | | 0.05 | 0.05 | 0.05 | 0.05 |

| Water | balance | | | | | | | | | | | |
|---|---|---|---|---|---|---|---|---|---|---|---|---|
| **Viscosity (cPs)** | 6500 | 6500 | 6500 | 6500 | 6410 | 6460 | 6595 | 6572 | 6930 | 6965 | 6980 | 6997 |

### III. Production of printed textile fabrics

Inks I1 to I12 according to the present invention were printed by lab flat screen test equipment; wet deposit: 20 g/m² on a surface of a textile fabric (White 100% Cotton Satin 120 g/m²). The printed textiles were dried by exposure to hot air (120°C) for one to three minutes. Subsequently, the dried textiles were calendered for 3 minutes at 150°C and an average pressure of 1-2 bars to provide the printed textile fabrics.

### IV. Evaluation of the properties of the printed textiles

The textile hand, colour development, dry rubbing fastness, and wet rubbing fastness of the produced printed textile fabrics were evaluated using the methods described below.

### TEXTILE HAND

An expert in the field compared the printed textile fabrics obtained as described at section III considering the following evaluation criteria:
*: Fabric with rash/bad hand
**: Fabric with relative bad hand
***: Good hand
****: Very good hand
*****: Excellent hand

The results are presented in Table 4.

### DRY RUBBING FASTNESS & WET RUBBING FASTNESS

The rubbing fastness indicative of the quality of adhesion of the pigment to the textile fabric was evaluated using a crockmeter.

Specifically, the printed fabric sample was rubbed with a white 100% cotton crocking cloth under a defined pressure (9 Newton) by moving the fabric back and forth in a straight line. For testing the rubbing fastness in a wet state (wet rubbing fastness), a wet white 100% cotton crocking cloth was used. Because of the mechanical abrasion, parts of the pigments are transferred from the printed textile fabric to the crocking cloth, leading to a decolouration of the printed textile fabric. The intensity of the colouring is assessed using a five-point scale (called grey scale). Level (or grade) 1 is the lowest value, level 5 is the best value. At level 5, the colour of the cotton crocking cloth is unchanged.

The results are presented in Table 4.

**Table 4: Properties of the printed textile fabric**

| Screen printing ink | Textile Hand | Rubbing fastness | |
|---|---|---|---|
| | | Dry | Wet |
| I1 | **** | 4 | 4 |
| I2 | **** | 4 | 4 |
| I3 | **** | 4.5 | 4.5 |
| I4 | **** | 3.5 | 3 |
| I5 | **** | 4-4.5 | 4-4.5 |
| I6 | **** | 4-4.5 | 4-4.5 |
| I7 | **** | 4-4.5 | 4-4.5 |
| I8 | **** | 3.5-4 | 3.5-4 |
| I9 | **** | 4-4.5 | 4-4.5 |
| I10 | **** | 4-4.5 | 4-4.5 |
| I11 | **** | 4-4.5 | 4-4.5 |
| I12 | **** | 3.5-4 | 3.5-4 |

As shown by Table 4, the inks I1 - 12 according to the present invention provide textile with very good hand and good to excellent rubbing fastness.

### COLOR DEVELOPMENT

The colour development was evaluated by measuring the optical density (OD) value using a colorimeter for the maximum colour saturation taken 100% as reference. The results are depicted in Figure 1.

### V. Preparation of screen-printing textile finishing compositions F1-F3

Starting from the dispersions D1 - D3 depicted by Table 2, the screen-printing textile finishing compositions F1-F3 were prepared by adding a thickener, and lauryl glucoside to said dispersions and mixing with a high-speed dispenser for 30 min. The viscosity was measured at 25°C and a shear rate of 200 s⁻¹ with a rheometer BROOKFLIED DVN, flat cone, 50 RPM.

**Table 5: Composition textile finishing compositions F1 (prepared from D1), F2 (prepared from D2), and F3 (prepared from D3)**

| | F1 | F3 | F4 |
|---|---|---|---|
| **Esterquat** | | | |
| REWOQUAT | 4.67 | 3.27 | 4.67 |

| **Surfactant** | | | |
|---|---|---|---|
| Span 80 | 0.09 | 0.07 | 0.09 |
| Tween 80 | 0.37 | 0.26 | 0.37 |
| Eco Brij CS20 | 1.07 | 0.64 | |
| Surfinol^{®} PSA 336 | | | 0.19 |
| Lauryl Glucoside | 1.6 | 1.6 | 1.6 |

| **Wax** | | | |
|---|---|---|---|
| Candellila wax | 10.47 | 6.28 | |
| Carnauba wax | 2.67 | 1.60 | |

| **Thickener** | | | |
|---|---|---|---|
| Hydroxypropyl Starch Phosphate | 3.8 | 3.8 | 3.8 |
| P41/3000 | | | 2.08 |

| **Oil** | | | |
|---|---|---|---|
| Linseed oil | | 0.25 | |
| Algae oil | | 1.41 | |

| **Biocide** | | | |
|---|---|---|---|
| Proxel^{™} GXL | | 0.07 | 0.09 |

| **pH adjusting agent** | | | |
|---|---|---|---|
| NaOH | | | 0.06 |
| **Glycerol** | | 0.25 | 23.65 |
| **Water** | balance | | |
| **Viscosity (cPs)** | 6150 | 6025 | 6390 |

### VI. Evaluation of the water-repellency of a textile finished with the textile finishing composition F1

The textile finishing composition F1 was printed by lab flat screen test equipment; wet deposit: 20 g/m²) on a surface of a textile fabric (100% Cotton Satin 120 g/m²). The printed textiles were dried by exposure to hot air (120°C) for one to three minutes. Subsequently, the dried textiles were calendered for 3 minutes at 150°C and an average pressure of 1-2 bars to provide the finished textile fabric.

The water repellence of the finished textile and of the corresponding untreated textile was evaluated in the AATCC 22 test method using the commercially available spray rating tester TF160 (supplier: Testex). Three samples were evaluated for each of the textile fabrics. During the experiment, the sample of finished fabric held in a mandrel is sprayed with water. The sample is oriented at 45° with respect to the nozzle head of the spray rating tester and positioned at a distance of 150 mm under the nozzle. At the end of the experiment, the appearance of the sprayed finished fabric is compared with the appearance of the finished fabric (not sprayed) by an expert and based on visual standards, a visual rating is given to the finished fabric. A visual rating of 100 indicates that the textile fabric preserves its initial aspect (i.e., no visually detectable difference between the appearance of the textile fabric prior and after the spraying) and no water was absorbed by the textile fabric during the experiment i.e., the textile fabric has excellent water repellence. The results of the visual rating are summarized in the Table 6 below:

**Table 6: Evaluation of the water-repellence properties**

| | Sample 1 | Sample 2 | Sample 3 |
|---|---|---|---|
| Untreated fabric | 95 | 95 | 95 |
| Finished fabric prior to washing | 100 | 100 | 100 |
| After 1st wash | 100 | 100 | 100 |
| After 5th wash | 100 | 100 | 100 |
| After 10th wash | 100 | 100 | 100 |
| After 20th wash | 100 | 100 | 100 |

### VII. Evaluation of the wicking properties of a textile finished with the textile finishing composition F2

The textile finishing composition F2 was printed by lab flat screen test printing equipment; wet deposit: 20 g/m²) on a surface of a textile fabric (100% Cotton Satin 120 g/m²). The printed textile was dried by exposure to hot air (120°C) for one to three minutes. Subsequently, the dried textile was calendered for 3 minutes at 150°C and an average pressure of 1-2 bars to provide the finished textile fabric.

The wicking properties of the finished textiles were evaluated in the water drop test method AATCC 79, and in the test method for vertical wicking rate of textiles AATCC 197 (effects were measured at 30 minutes).

The water drop test method AATTCC 79, also known as absorption time - dropping test, is conventionally used in the textile industry to measure the absorption time of a drop of water by the textile fabric. To measure the absorption time, the textile fabric is held in a mandrel and a drop of water (0.1 mL) is deposited with a micropipette on the surface of the fabric. The time required by the textile fabric to absorb the drop (absorption time) is measured. The absorption time is a measure of the wicking properties of the textile fabric.

Test method AATCC 197 is generally used in textile industry to evaluate the ability of fabric specimens to transport liquid vertically when a cut edge is submerged. The determined vertical wicking rate represents a measure of the textile wicking properties. Cut edges of samples of the finished textile (14.0 x 2.5 cm) were submerged in water for 30 minutes. The samples were submerged both in the warp and in the weft direction. The height of the water absorbed by the samples (wicking distance) after 30 min was measured. Wicking distances at 30 minutes superior to 13 cm are indicative of textile fabrics having excellent absorbency and wicking behaviour. The results are summarized in Table 7 below:

**Table 7: Evaluation of the wicking properties**

| | **Absorption time measured in test method AATCC 79 (seconds)** | **Wicking Distance (cm) measured at 30 minutes in test method AATCC 197** | |
|---|---|---|---|
| | | WRAP | WEFT |
| 1^{st} finished textile | <1 | 16.5 | 17.0 |
| 2^{nd} finished textile | <1 | 17.0 | 16.3 |
| 3^{rd} finished textile | <1 | 17.0 | 16.9 |

### VIII. Evaluation of the softness of a textile finished with the textile finishing composition F3

The textile finishing composition F3 was printed by lab flat screen test printing equipment; wet deposit: 20 g/m²) on a surface of a textile fabric (100% Cotton Satin 120 g/m²). The printed textile was dried by exposure to hot air (120°C) for one to three minutes. Subsequently, the dried textile was calendered for 3 minutes at 150°C and an average pressure of 1-2 bars to provide the finished textile fabric.

Following finishing, the softness of the finished fabric was evaluated by an expert by hand touch prior to washing and after 5, 10 and 20 washings, respectively. Compared to the untreated textile, the finished textile exhibits an excellent softness. The softness is maintained after 5, 10 and 20 washings.

## Claims

1. A silicone- and halogen-free water-based screen-printing ink composition for textile printing,
wherein said composition has a viscosity from 1000 to 8000 cPs, preferably from 5000 to 8000 cPs, at 25°C and a shear rate of 1 to 100 s⁻¹, and comprises, preferably consists of:
- from 1.0 wt-% to 5.0 wt-% of a pigment dispersed within the composition;
- from 0.5 wt-% to 6.0 wt-% of a water-dispersible binder selected from a water-dispersible polyurethane resin, a water-dispersible poly(meth)acrylate resin, and mixtures thereof;
- from 1.5 wt-% to 3.0 wt-% of a surfactant;
- from 3.0 wt-% to 6.0 wt-% of a thickening agent selected from a starch, a carob gum, a guar gum, a carrageenan, an alginic acid, a polyalkylene glycol polymer, and mixtures thereof;
- from 2.5 wt-% to 4.5 wt-% of an esterquat;
- optionally a pH adjusting agent and/or a biocide and/or a wax of vegetal origin and/or an oil of vegetal origin and/or glycerol; and
- water;
wherein the wt-% are based on the total weight of the composition.

2. The screen-printing ink composition according to claim 1, wherein the ink composition contains a wax of vegetal origin.

3. The screen-printing ink composition according to claim 2, wherein the wax of vegetal is in an amount from 5.0 wt-% to 15.0 wt-%, the wt-% being based on the total weight of the ink composition.

4. The screen-printing ink composition according to claim 2 or 3, wherein the wax of vegetal origin is a mixture of Candellila wax and Carnauba wax.

5. The screen-printing ink composition according to any one of the previous claims, wherein the ink composition contains an oil of vegetal origin.

6. The screen-printing ink composition according to claim 5, wherein the oil of vegetal origin is in an amount from 1.0 wt-% to 4.0 wt-%, the wt-% being based on the total weight of the ink composition.

7. The screen-printing ink composition according to any one of the previous claims, wherein the thickening agent is a starch, or a mixture of thickening agents, wherein one of said thickening agents is a starch.

8. The screen-printing ink composition according to any one of the previous claims, wherein the surfactant is a mixture of surfactants, wherein one of said surfactants is lauryl glucoside.

9. The screen-printing ink composition according to any one of the previous claims, wherein the screen printing ink composition is a rotary screen printing ink composition, or a flat screen printing ink composition.

10. A process for manufacturing a printed, optionally finished, textile fabric comprising, preferably consisting of, the following steps:
a) providing a non-coloured textile fabric;
b) screen printing one or more screen printing compositions on one side of said fabric, or one or more regions of said side, wherein at least one of said screen printing composition is a screen-printing ink composition according to any one of the previous claims;
c) drying the textile by exposure to an air having a temperature from about 120°C to about 140°C for at least 1 min to provide a dried textile; and
d) calendering the textile fabric for at least 10 seconds at a temperature from about 140°C to about 160°C to provide a printed, optionally finished, textile fabric.

11. The process according to claim 10, wherein the textile fabric contains synthetic and/or natural fibers, preferably selected from silk fibers, cellulose fibers, elastane fibers, polyamide fibers and polyester fibers.

12. The process according to claim 10 or 11, wherein one or more of the screen-printing composition are textile finishing compositions, preferably wherein the textile finishing compositions are selected from the group consisting of textile softening compositions, water-repellent textile finishing compositions, and textile finishing compositions for improving the wicking properties.

13. The process according to claim 12, wherein the textile finishing compositions are printed after the screen-printing ink compositions.

14. A process for manufacturing a garment comprising the step of converting the printed, optionally finished, textile fabric according to any one of claims 10 to 13 into a garment.

15. Use of a starch, a carob gum, a guar gum, a carrageenan, an alginic acid, a polyalkylene glycol polymer, or a mixture thereof as a thickening agent in a water-based screen-printing ink composition for textile printing, preferably the silicone- and halogen-free water-based screen-printing ink composition according to any one of claims 1 to 9.
